# FASCICULE DE BREVET EUROPEEN

(11) **EP 1 382 436 B1**
(45) Date de publication et mention de la délivrance du brevet: **29.11.2006**
(21) Numéro de dépôt: 02360217.0
(22) Date de dépôt: 19.07.2002
(51) Int. Cl.: B29C 70/46, B29C 70/54

(54) **Procédé de moulage d'une pièce en materiau composite et dispositif permettant la mise en oeuvre dudit procédé**
Verfahren zum Formen eines Verbundwerkstoffgegenstandes und Vorrichtung zur Durchführung dieses Verfahrens
Method for moulding a composite article and moulding apparatus for carrying out said method

(43) Date de publication de la demande: 21.01.2004
(73) Titulaire: Duqueine, Vincent, 69370 St Didier au Mont d'Or (FR)
(72) Inventeur: Duqueine, Vincent, 69370 St Didier au Mont d'Or (FR)
(74) Mandataire: Rhein, Alain

(56) Documents cités:
- EP-A- 0 355 641
- EP-A- 0 755 772
- PATENT ABSTRACTS OF JAPAN vol. 014, no. 367 (M-1008), 9 août 1990 (1990-08-09) & JP 02 131929 A (SEKISUI CHEM CO LTD), 21 mai 1990 (1990-05-21)

## Description

La présente invention a pour objet un procédé de moulage d'une pièce en matériau composite et le dispositif permettant la mise en oeuvre dudit procédé.

On connaît déjà différents procédés de moulage de pièces en matériau composite, permettant de mettre en forme ledit matériau, qui consiste en des fibres noyées dans une matrice thermodurcissable ou thermoplastique, au moyen d'un moule et en association avec des conditions particulières de pression et de température.

Les fibres consistent généralement en du verre, du carbone ou de l'aramide, tandis que la matrice est du type époxyde, phénolique ou autre.

Les procédés connus diffèrent également selon la manière dont le matériau composite est mis en oeuvre dans le moule. Ces procédés utilisent pour la plupart un mat se présentant sous la forme d'une nappe non tissée de fibres s'étendant parallèlement, et dans laquelle sont prélevés soit des plis destinés à être superposés, en variant éventuellement l'orientation de fibres afin d'augmenter la résistance de l'ensemble, soit des morceaux plus ou moins longs et/ou larges que l'on dispose dans le moule, lesdits morceaux de nappe pré-imprégnée étant disposés en vrac de manière aléatoire ou selon un arrangement tridimensionnel particulier lié à l'usage de la pièce à réaliser.

On notera que les morceaux de nappe pré-imprégnée peuvent être conformés en une structure réalisée en dehors du moule, ce qui permet d'arranger les fibres selon une orientation préférée, et ainsi obtenir une résistance accrue à un effort connu, cette manière de faire est toutefois coûteuse en temps.

Le document EP 0.025.689 décrit un complexe réalisé par un tel procédé, et qui consiste en une feuille faite de l'assemblage de deux feuilles elles-mêmes constituées de l'assemblage de morceaux découpés dans une nappe de fibres pré-imprégnées.

On connaît également par le document FR 2.740.149 un procédé de moulage à partir d'une feuille constituée d'un assemblage de morceaux d'une nappe de fibres pré-imprégnées. Les morceaux de nappe sont superposés à plat et au hasard, pour former une structure qui est ensuite soumis à une pression de l'ordre de 10 à 80 kg/cm² et à une température de l'ordre de 210 à 350°C.

D'autre part, le document EP 0.916.477 décrit un procédé de moulage d'une pièce en matériau composite à partir d'une structure composite constituée de l'assemblage de morceaux d'une nappe de fibres pré-imprégnées, où lesdits morceaux sont disposés de manière à obtenir un arrangement tridimensionnel des fibres, ladite structure étant ensuite soumise à température de l'ordre de 150°C et à une pression de l'ordre de 10 à 100 bars.

On notera qu'il a été ainsi constaté, lors de la mise sous forte pression, un fluage de la matrice thermodurcissable ou thermoplastique, que l'on peut assimiler à un essorage des fibres en sorte que la pièce obtenue est d'une faible résistance

Les procédés précités sont destinés à la fabrication d'objets particuliers, ainsi le procédé du document FR 2.740.149 est destiné à la fabrication d'embouts renforcés de chaussures, tandis que le procédé du document EP 0.916.477 est essentiellement destiné à la fabrication d'objets du type manivelles de pédalier de bicyclette. Si ces objets sont d'une grande résistance, celle-ci est toutefois limitée, ce qui ne permet pas la fabrication de certaines pièces qui présentent une certaine complexité de forme.

Dans le cas par exemple de pièces creuses présentant des éléments d'axes différents se rejoignant, il convient d'utiliser un noyau autour de chacune des parties duquel sont disposés des matelas de plis, puis de mettre l'ensemble dans un moule sous pression. Toutefois on peut constater une très mauvaise liaison entre eux des différents éléments, du fait que celle-ci résulte du fluage uniquement de la matrice thermodurcissable ou thermoplastique.

Par ailleurs, dans le cas particulier d'un objet présentant un ou plusieurs trous traversants, il est possible de procéder de différentes manières

On peut réaliser un perçage après moulage avec l'inconvénient, outre la difficulté de réalisation du fait de la dureté du matériau, du sectionnement de fibres ce qui crée une relative faiblesse aux abords du trou.

On peut également comme cela est préconisé dans le document EP 0.916.477, utiliser un insert ou noyau disposé dans le moule, et, éventuellement, enrouler des morceaux de nappe de fibres pré-imprégnées autour de cet insert ou noyau, ce qui présente des risques de discontinuité du réseau de fibres sur l'ensemble de l'objet réalisé.

Par ailleurs, les procédés actuellement connus nécessitent après démoulage des travaux d'usinage et d'ébavurage coûteux en main d'oeuvre, et qui peuvent nuire à la résistance de l'objet réalisé.

On connaît également par le document EP 0 355 641, qui décrit le préambule des revendications 1 et 4, JP 02 131929 EP et 0 755 772, des procédés de fabrication d'objets en matériau composite par moulage où il est prévu de réaliser des étapes de mise en forme, d'élimination de surplus de matière, de pression et de chauffage puis de refroidissement. On a pu constater que les objets obtenus par les procédés décrits dans ces documents ne présentent pas une résistance homogène, du fait notamment desdits procédés et des dispositifs permettant leur mise en oeuvre.

La présente invention a pour but de remédier à ces divers inconvénients en proposant un procédé de moulage d'une pièce en matériau composite, qui permet notamment de réaliser des pièces d'une résistance supérieure à celle des pièces obtenues par les procédés de moulage actuellement connus, quelle que soit la complexité de cette pièce.

Le procédé de moulage d'une pièce en matériau composite selon l'invention est du type consistant à placer dans un moule un empilement de plis prélevés dans une nappe de fibres noyées dans une matrice thermodurcissable ou thermoplastique, et arrangés selon des directions préférentielles desdites fibres, et à soumettre ledit moule à des conditions particulières de pression et de température, et il se caractérise en ce qu'il consiste à réaliser des opérations successives de:
- mise en forme dudit empilement de plis dans le moule, sous une pression faible réalisée progressivement à vitesse lente,
- élimination du surplus de matière sortant du bord du moule,
- réalisation de l'étanchéité du moule par l'extérieur,
- augmentation de la pression jusqu'à une forte pression,
- montée en température du moule,
- refroidissement rapide du moule.

Le procédé selon l'invention permet de réaliser un véritable forgeage du matériau composite, qui donne à la pièce obtenue une très grande résistance, ce qui permet d'envisager la fabrication de pièces jusque là réalisées en métal, de l'aluminium par exemple.

Les procédés existants, notamment ceux décrits dans les documents EP 0 355 641, JP 02 131929 EP et 0 755 772, ne permettent pas d'atteindre ce résultat, en effet, l'enlèvement du surplus de matière est réalisé avant la mise en forme et avant la mise sous pression, en sorte que la quantité de matière utilisée n'est pas optimale, et la coupe en cours de pression engendre généralement un fluage de la matrice thermodurcissable, avec pour conséquence un affaiblissement de la pièce obtenue par moulage.

De plus, dans les procédés des documents précités, il n'est pas prévu de réaliser l'étanchéité du moule en sorte que l'on observe le fluage de la matrice thermodurcissable ou thermoplastique.

Selon une caractéristique additionnelle du procédé selon l'invention, la forte pression est comprise entre 50 et 200 bars, tandis que la température de chauffage du moule est comprise entre 125 et 135°C.

On notera que l'utilisation d'une pression jusqu'à 200 bars n'est possible que du fait de la réalisation de l'étanchéité du moule par l'extérieur, dans le cas contraire on observe un essorage des fibres.

Selon une autre caractéristique additionnelle du procédé selon l'invention, l'opération d'élimination du surplus de matière est associée, si la pièce à réaliser doit comporter un ou plusieurs trous traversants, à une opération de poinçonnage au travers du moule.

Simultanément à l'enlèvement de la matière en surplus, on réalise un poinçonnage au travers du moule, et le ou les poinçons ou emporte-pièce sont maintenus en place durant les opérations de pression et de chauffage.

Lors de l'amorce du poinçonnage les fibres ne sont pas immédiatement coupées, en sorte qu'après découpe les extrémités de celles-ci sont orientées selon un autre axe que leur axe principal, ce qui donne au bord du trou une résistance particulière, ce que ne permet pas d'obtenir, par exemple, une opération de perçage démoulage.

On notera qu'une la réorientation des extrémités des fibres est également obtenue sur le pourtour de la pièce lors de la coupe du surplus de matière.

On notera que le poinçonnage est réalisé après mise en forme dans le moule sous une pression faible, ce qui revêt une grande importance. En effet dans le document EP 0 355 641 par exemple, on réalise un poinçonnage dans le moule avant mise en forme et avant mise sous pression, ou alors de manière simultanée et non successive, ce qui a pour conséquence un risque de fluage de la matrice thermodurcissable et également de suppression de certaines fibres, et donc la non obtention d'un forgeage.

Pour la réalisation de pièces complexes telles que celles évoquées plus haut, c'est-à-dire, par exemple, creuse et comprenant plusieurs élément d'axes différents se rejoignant, la mise sous pression avec étanchéité du moule permet, puisqu'il n'y à pas essorage, de faire fluer les fibres en sorte d'obtenir un entrelacement des fibres d'un matelas destiné à la réalisation de l'un desdits éléments avec les fibres d'un ou de plusieurs autres matelas, pour aboutir à une pièce de grande résistance.

Le dispositif permettant la mise en oeuvre du procédé de moulage selon l'invention est du type comportant un moyen de pression d'un moule constitué d'au moins deux parties entre lesquelles est disposé l'empilement de plis, et il se caractérise essentiellement en ce qu'il comporte :
- un moyen de coupe mobile par rapport audit moule, et apte, sous l'action d'un moyen d'entraînement, à découper le surplus de matière débordant desdites parties après pressage de celles-ci et à épouser la forme externe desdites parties au niveau de leur ligne de jonction afin de constituer un joint étanche,
- ainsi que des moyens aptes à chauffer et à refroidir rapidement lesdites parties.

Les dispositifs existants sont prévus aptes à la mise en oeuvre des procédés existants, ainsi, ils comportent généralement deux parties entre lesquelles est disposé l'empilement de plis, lesdites parties présentant la forme à réaliser, et au moins l'une desdites parties comprend une lame de coupe ou analogue permettant d'éliminer le surplus de matière avant ou simultanément à la mise en forme, avec les inconvénients précités que cela génère.

Selon une caractéristique additionnelle du dispositif selon l'invention, les moyens de pression et d'entraînement, consistent en des vérins alignés et agissant en sens opposés.

Selon une autre caractéristique additionnelle du dispositif selon l'invention, les moyens aptes à chauffer et à refroidir rapidement les parties du moule consistent en des moyens permettant de faire circuler dans ceux-ci un liquide caloporteur pressurisé, associés à des moyens permettant de chauffer ou de refroidir ledit liquide caloporteur.

On notera que l'opération de chauffe peut être également réalisée électriquement ou par induction, le refroidissement demeurant au moyen d'un fluide caloporteur.

Selon une autre caractéristique additionnelle du dispositif selon l'invention, il comporte au moins un poinçon apte à traverser les parties du moule qui présentent à cet effet des trous en regard.

Selon une autre caractéristique additionnelle du dispositif selon l'invention, le ou les poinçons sont solidaires des moyens de coupe et animés par le même moyen d'entraînement.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
- les figures 1a, 1b, 1c et 1d représentent des vues schématiques illustrant différentes étapes du procédé de moulage selon l'invention.
- la figure 2 représente une vue en perspective d'une pièce réalisée par le procédé selon l'invention.
- la figure 3 représente une vue schématique en plan d'une partie du dispositif permettant la fabrication de la même pièce.
- la figure 4 représente une vue schématique en perspective d'un objet susceptible d'être réalisé par le procédé selon l'invention.

En référence à la figure 1a, on peut voir une première étape du procédé de moulage selon l'invention, au moyen d'un dispositif comprenant notamment un moule 1 réalisé en deux parties, une partie mâle 10 et une partie femelle 11.

La première étape consiste à disposer entre les deux parties 10 et 11 du moule 1, un empilement 2 de plis 20 découpés dans une nappe fibres noyées dans une matrice thermodurcissable ou thermoplastique. Les fibres consistent en du verre, du carbone ou de l'aramide, tandis que la matrice est du type époxyde, phénolique ou autre. Les plis 20 ne sont pas empilés au hasard, ils sont de préférence arrangés en sorte que d'un pli 20 à l'autre les fibres s'étendent dans des directions différentes de manière à réaliser un entrecroisement prédéterminé.

On notera que l'empilement 2 peut être soit disposé entre les parties 10 et 11 du moule 1, soit appliqué sur l'une ou l'autre des parties 10 et 11, afin d'éviter, dans le cas de d'une forme particulièrement complexe de l'empreinte, un fluage de la matrice thermodurcissable ou thermoplastique, et donc la création d'une ou de plusieurs zones dépourvues de fibres de renfort.

L'étape suivante consiste à rapprocher les deux parties 10 et 11 et à serrer l'empilement 2 sous une faible force le rapprochement des parties 10 et 11 étant réalisé progressivement, à une vitesse de l'ordre de 3 millimètres par seconde, en sorte que l'empilement prenne la forme de l'empreinte comme cela est représenté sur la figure 1b.

La vitesse de rapprochement des deux parties 10 et 11 peut varier en fonction de la complexité de la pièce à réaliser. De même, cette vitesse peut varier en fonction de la température de l'outillage. Une vitesse lente associée à une certaine température permettra plus ou moins, selon le type de pièce, un glissement entre chaque pli.

Les dimensions des plis 20 sont calculées en sorte qu'après mise en forme ceux-ci débordent sur tout le pourtour du moule 1, afin d'éviter la formation de manques. Il est donc nécessaire de procéder à l'enlèvement du surplus 21, ce qui est réalisé au moyen d'un couteau 3, mobile en translation verticale, et apte à épouser intimement la forme extérieure du moule 1.

On notera que le couteau 3 doit être de conception robuste, et que d'autre part son fil 30 doit de préférence ne pas être contenu dans un plan afin d'éviter, si le bord périphérique de la pièce à mouler est en majorité plan, d'attaquer la matière parallèlement à celle-ci. Ainsi, le fil 30 du couteau 3 décrit une ligne brisée ou une courbe en sorte de ne jamais être parallèle avec la matière à couper.

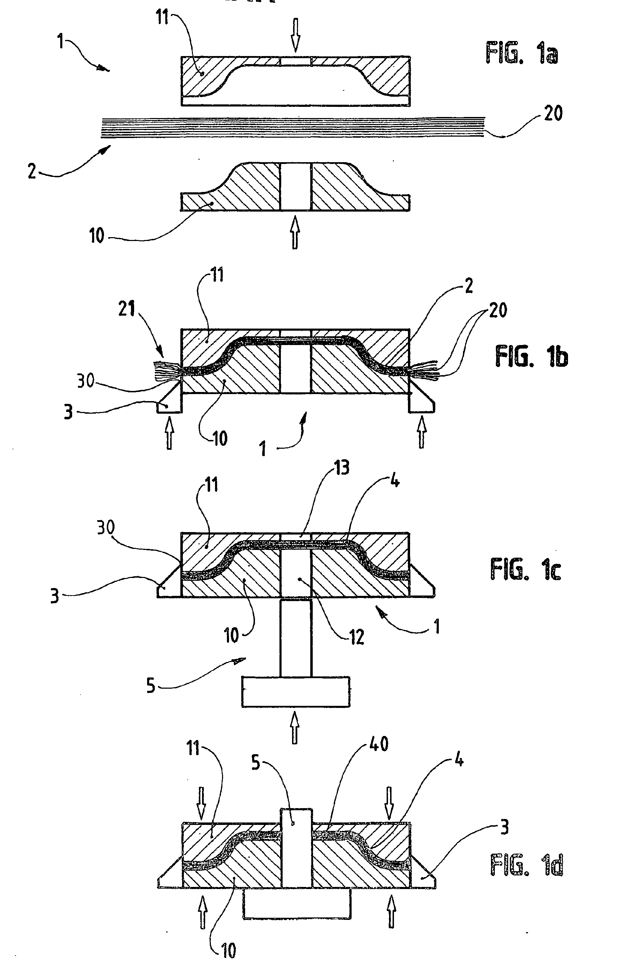

En référence à la figure 1c on peut voir que le couteau 3 a éliminé le surplus de matière 21 et qu'il reste en place sur le pourtour du moule 1, ce qui permet de fermer ce dernier de manière étanche.

Dans l'exemple représenté, la pièce 4 à réaliser doit comporter un trou traversant 40 disposé centralement, aussi les parties 10 et 11 du moule 1 comportent chacune un orifice, respectivement 12 et 13, tandis qu'un emporte-pièce 5, mobile en translation verticale, est apte à être introduit dans l'orifice 12 puis dans l'orifice 13, en sorte de réaliser le percement de l'empilement 2.

En référence maintenant à la figure 1d, on peut voir qu'après la réalisation du percement de l'empilement 2, l'emporte-pièce 5 est maintenu en place, de manière étanche, et les parties 10 et 11 sont pressées l'une en direction de l'autre, ce qui est réalisé sous une pression de l'ordre de 50 à 200 bars, tandis que simultanément elles sont chauffées à une température de l'ordre de 125 à 135°C, de préférence 132°C, la pression et la température étant maintenues pendant une durée de l'ordre de 15 à 20 minutes.

On notera que de préférence il n'est pas prévu de butées de fin de course sur les parties 10 et 11, la fermeture de celles-ci est réalisée directement sur les plis 20, ce qui permet d'atteindre de fortes pressions et nécessite, de ce fait, que l'étanchéité soit parfaite pour éviter un essorage des fibres.

La mise en température du moule 1 est réalisée au moyen d'un fluide caloporteur tel que de l'eau, circulant sous pression dans des canalisations, non représentées, que comporte chacune des parties 10 et 11, ou bien électriquement ou par induction.

Le moule 1 est ensuite refroidi par l'intermédiaire d'un fluide caloporteur, puis le couteau 3 ainsi que l'emporte-pièce 5 sont enlevés, et les parties 10 et 11 du moule 1 sont séparées afin de libérer la pièce moulée 4.

Du point de vue mise en oeuvre, un vérin permet de presser les parties 10 et 11 du moule 1 l'une contre l'autre, tandis qu'un deuxième vérin, agissant dans le sens opposé au premier, pousse le couteau 3 et qu'un troisième vérin d'action identique au deuxième pousse l'emporte-pièce 5.

On notera que selon une variante, le couteau 3 et l'emporte-pièce 5 peuvent être solidaires, en sorte d'être mus par le même vérin, la coupe et le poinçonnage étant ainsi réalisés simultanément.

La pièce 4 ainsi réalisée est d'une très grande résistance, laquelle n'est pas entamée par la présence du trou 40, puisqu'en effet la réalisation de celui-ci n'altère pas la continuité du réseau de fibres au niveau de l'ensemble de la pièce.

Par ailleurs, la réalisation du trou 40 pouvant être assimilée à un forgeage autour de l'emporte-pièce 5, cela confère à la paroi qui le borde une résistance inégalée par les procédés connus et qui consistent soit à percer après démoulage, soit à placer dans le moule un insert enrobé préalablement au moulage.

Le procédé de moulage selon l'invention peut présenter certaines variantes, on peut ainsi utiliser un ou plusieurs inserts destinés à prendre place dans l'empilement 2, ce ou ces inserts étant bien entendu aptes à être calés dans le moule 1.

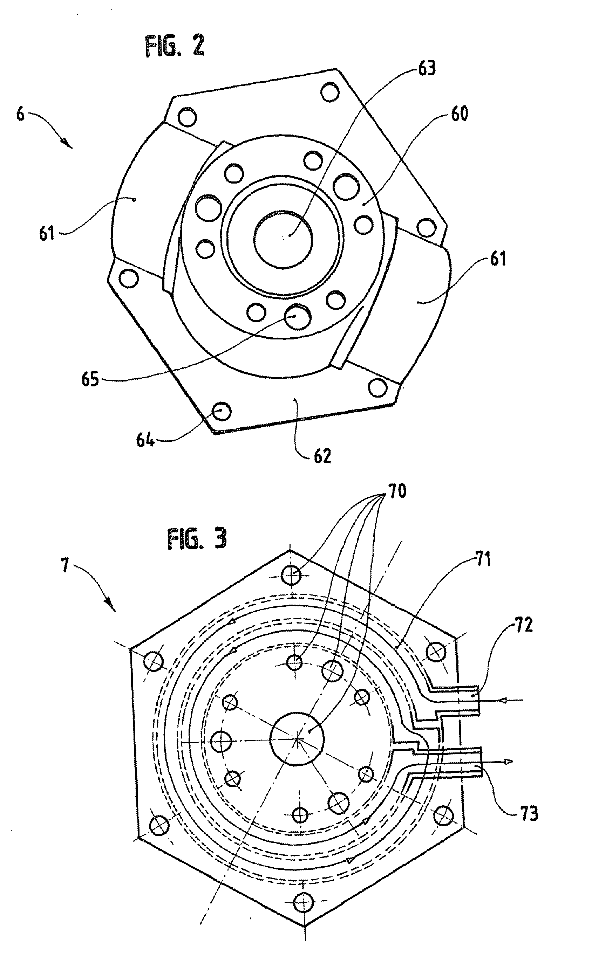

En référence maintenant à la figure 2, on peut voir une pièce réalisée par le procédé selon l'invention. Il s'agit d'une demi-coque 6 d'un moyeu pour hélices d'un ultralégermotorisé (ULM), sachant deux demi-coques identiques permettent de réaliser un moyeu.

Comme on peut le voir, cette demi-coque 6 présente dans sa région médiane une partie creuse 60 dans laquelle débouchent deux parties 61 de forme semi-tubulaire destinées chacune au passage de l'extrémité d'une pale, tandis que le pourtour 62 est en majorité plan.

On peut constater que la demi-coque 6 comporte de nombreux orifices 63, 64 et 65 respectivement de centrage de l'hélice, de fixation du plateau et de blocage des pales, tous réalisés par le procédé selon l'invention au moyen d'un mandrin comportant autant d'emporte-pièce.

En référence maintenant à la figure 3, on peut voir la partie 7, mâle ou femelle, d'un moule permettant de fabriquer une demi-coque 6. On peut constater que cette partie 7 comporte des trous 70 destinés au passage des emporte-pièce, ainsi qu'un canal interne périphérique 71 présentant une entrée 72 et une sortie 73, et destiné à la circulation d'un fluide caloporteur tel que de l'eau, permettant de réaliser la montée en température du moule, et notamment le refroidissement rapide de celui-ci.

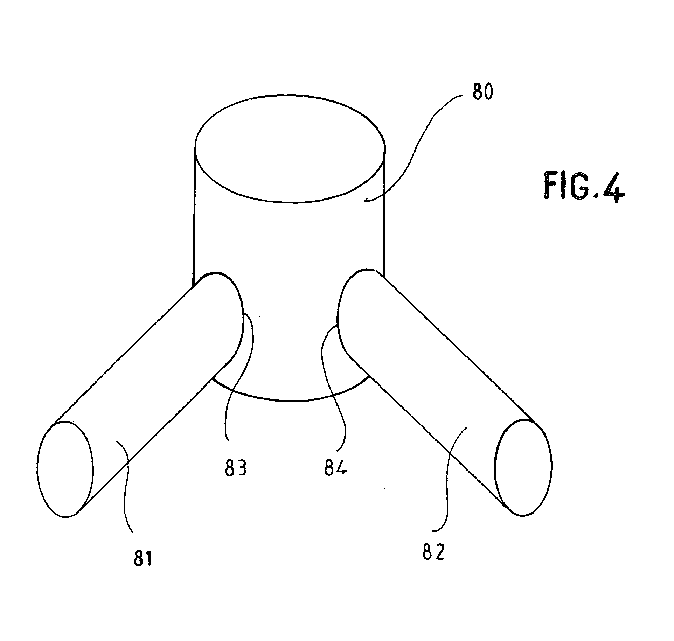

En référence maintenant à la figure 4, on peut voir une pièce 8 susceptible d'être réalisée par le procédé selon l'invention. Cette pièce 8 résulte de l'assemblage radial sur une douille 80 de deux douilles 81 et 82, par leur tranche, respectivement 83 et 84.

En pratique, on utilise un noyau sur lequel sont disposés des empilements de plis pour la réalisation d'un manchon pour chacune des douilles 80, 81 et 82, en association avec des plis de liaison recouvrant ces manchons. Avec les procédés existants, la solidarisation des douilles 80, 81 et 82 tient uniquement aux plis de liaison, et au fluage de la matrice thermodurcissable en sorte que l'on obtient une pièce de faible résistance.

Avec le procédé selon l'invention, on observe, du fait notamment de l'association étanchéité - forte pression, un fluage des fibres ce qui augmente considérablement la liaison entre les douilles.
Le procédé selon l'invention permet ainsi de réaliser industriellement des pièces complexes.

## Revendications

1. Procédé de moulage d'une pièce en matériau composite du type consistant à placer dans un moule (1) un empilement (2) de plis (20) prélevés dans une nappe de fibres noyées dans une matrice thermodurcissable ou thermoplastique, et arrangés selon des directions préférentielles desdites fibres, et à soumettre ledit moule à des conditions particulières de pression et de température, et il se **caractérise en ce qu**'il consiste à réaliser des opérations successives de:
- mise en forme dudit empilement (2) de plis (20) dans le moule (1), sous une pression faible réalisée progressivement à vitesse lente,
- élimination du surplus de matière (21) sortant du bord du moule (1),
- réalisation de l'étanchéité du moule par l'extérieur,
- augmentation de la pression jusqu'à une forte pression,
- montée en température du moule (1),
- refroidissement rapide du moule (1).

2. Procédé selon la revendication 1, **caractérisé en ce que** la forte pression est comprise entre 50 et 200 bars, tandis que la température de chauffage du moule est comprise entre 125 et 135°C.

3. Procédé selon la revendication 1 ou la revendication 2, **caractérisé en ce que** l'opération d'élimination du surplus de matière (21) est associée à une opération de poinçonnage au travers du moule (1).

4. Dispositif permettant la mise en oeuvre du procédé de moulage selon l'une quelconque des revendications précédentes, du type comportant un moyen de pression d'un moule (1) constitué d'au moins deux parties (10, 11) entre lesquelles est disposé l'empilement (2) de plis (20), **caractérisé en ce qu'**il comporte :
- un moyen de coupe (3) apte, sous l'action d'un moyen d'entraînement, à découper le surplus (21) de matière débordant desdites parties (10, 11) après pressage de celles-ci et à épouser la forme externe desdites parties (10, 11) au niveau de leur ligne de jonction afin de constituer un joint étanche,
- ainsi que des moyens (71) aptes à chauffer et à refroidir rapidement lesdites parties (10, 11).

5. Dispositif selon la revendication 4, **caractérisé en ce que** les moyens de pression et d'entraînement, consistent en des vérins alignés et agissant en sens opposés.

6. Dispositif selon la revendication 4 ou la revendication 5, **caractérisé en ce que** les moyens aptes à chauffer les parties (10, 11) consistent en des moyens électriques ou à induction, tandis que les moyens aptes à refroidir consistent en des moyens permettant de faire circuler u liquide caloporteur.

7. Dispositif selon la revendication 4 ou la revendication 5, **caractérisé en ce** les moyens aptes à chauffer et à refroidir rapidement les parties (10, 11) du moule (1) consistent en des moyens (71) permettant de faire circuler dans ceux-ci un liquide caloporteur pressurisé, associés à des moyens permettant de chauffer ou de refroidir ledit liquide caloporteur.

8. Dispositif selon l'une quelconque des revendications 4 à 7, **caractérisé en ce qu**'il comporte au moins un poinçon (5) apte à traverser les parties (10, 11) du moule (1) qui présentent à cet effet des trous (12, 13, 70) en regard.

9. Dispositif selon la revendication 8, **caractérisé en ce que** le ou les poinçons (5) sont solidaires des moyens de coupe (3) et animés par le même moyen d'entraînement.

## Claims

1. Method for moulding a composite article of the type consisting in placing in a mould (1) a stack (2) of folds (20) taken in a layer of fibers embedded in a thermosetting or thermoplastic die, and arranged according to preferable directions of said fibres, and in subjecting said mould to particular pressure and temperature conditions, and it is **characterized in that** it consists in effectuating the successive operations of:
- shaping said stack (2) of folds (20) in the mould (1), under low pressure effectuated progressively at slow speed,
- elimination of the surplus of material (21) getting out of the rim of the mould (1),
- effectuation of the tightness of the mould from the outside,
- increasing the pressure up to high pressure,
- increasing the temperature of the mould (1),
- quick cooling of the mould (1).

2. Method according to claim 1, **characterized in that** high pressure is in the range between 50 and 200 bars, whereas the heating temperature of the mould is in the range between 125 and 135°C.

3. Method according to claim 1 or claim 2, **characterized in that** the operation of eliminating the surplus of material (21) is associated with an operation of punching through the mould (1).

4. Device permitting the implementation of the moulding method according to any of the preceding claims, of the type including a means for putting a mould (1) under pressure consisting of at least two parts (10, 11) between which is disposed the stack (2) of folds (20), **characterized in that** it includes:
- a cutting means (3) capable, under the action of a driving means, of cutting the surplus (21) of material getting out of said parts (10, 11) after pressing the latter and of hugging the external shape of said parts (10, 11) at the level of their junction line in order to constitute a tight joint,
- as well as means (71) capable of heating and of cooling quickly said parts (10, 11).

5. Device according to claim 4, **characterized in that** the means for putting under pressure and the driving means consist of aligned jacks acting in opposite directions.

6. Device according to claim 4 or claim 5, **characterized in that** the means capable of heating the parts (10, 11) consist of electric means or induction driven means, whereas the cooling means consist of means permitting to circulate a coolant.

7. Device according to claim 4 or claim 5, **characterized in that** the means capable of heating and of cooling quickly the parts (10, 11) of the mould (1) consist of means (71) permitting to circulate in the latter a pressurized coolant, associated with means permitting to heat or cool said coolant.

8. Device according to any of claims 4 through 7, **characterized in that** it includes at least a punch (5) capable of traversing the parts (10, 11) of the mould (1) which, for this purpose, have facing holes (12, 13, 70).

9. Device according to claim 8, **characterized in that** the punch or punches (5) are made integral with cutting means (3) and driven by the same driving means.

## Patentansprüche

1. Verfahren zum Formen eines Verbundwerkstoffgegenstandes, der Art bestehend darin, in eine Gußform (1) eine Aufschichtung (2) von Gewebelagen (20) zu setzen, die von einem Vlies von Fasern entnommen sind, die in eine duroplastische oder thermoplastische Matrize eingebettet und nach bevorzugten Richtungen der besagten Fasern ausgerichtet sind, und darin, die besagte Gußform besonderen Druck- und Temperaturbedingungen auszusetzen, und **dadurch gekennzeichnet, daß** es darin besteht, aufeinanderfolgende Arbeitsvorgänge durchzuführen zum/zur:
- Anbringung der besagten Aufschichtung (2) von Gewebelagen (20) in die Gußform (1) unter einem schwachen Druck, allmählich ausgeführt mit langsamer Geschwindigkeit,
- Beseitigung des Werkstoffüberschusses (21), der über dem Rand der Gußform (1) herausgeht,
- Ausführung der Abdichtung der Gußform von der Außenseite aus,
- Erhöhung des Drucks bis zu einem starken Druck,
- Anstieg der Temperatur der Gußform (1),
- schnellen Abkühlen der Gußform (1).

2. Verfahren nach Anspruch 1, **dadurch gekennzeichnet, daß** der starke Druck zwischen 50 und 200 Bar liegt, während die Heiztemperatur der Gußform zwischen 125 und 135°C liegt.

3. Verfahren nach Anspruch 1 oder Anspruch 2, **dadurch gekennzeichnet, daß** der Vorgang zur Beseitigung des Werkstoffüberschusses (21) einem Arbeitsvorgang zum Lochstanzen durch die Gussform hindurch (1) zugeordnet ist.

4. Vorrichtung, erlaubend die Durchführung des Verfahrens zum Formen nach irgendeinem der vorgehenden Ansprüche, der Art umfassend ein Druckmittel einer Gußform (1), bestehend aus wenigstens zwei Teilen (10, 11), zwischen denen die Aufschichtung (2) von Gewebelagen (20) angeordnet ist, **dadurch gekennzeichnet, daß** sie folgendes umfaßt:
- ein Mittel zum Schneiden (3), geeignet, um unter der Wirkung eines Antriebsmittels den Werkstoffüberschuß (21), der aus den besagten Teilen (10, 11) nach dem Pressen derselben übertritt, abzuschneiden, und der äußeren Form der besagten Teile (10, 11) im Bereich ihrer Verbindungslinie genau entspricht, um eine wasserdichte Abdichtung zu bilden,
- sowie Mittel (71), die geeignet sind, um die besagten Teile (10, 11) schnell zu heizen und abzukühlen.

5. Vorrichtung nach Anspruch 4, **dadurch gekennzeichnet, daß** die Druck- und Antriebsmittel aus Arbeitszylindern bestehen, die ausgefluchtet sind und in entgegengesetzten Richtungen wirken.

6. Vorrichtung nach Anspruch 4 oder Anspruch 5, **dadurch gekennzeichnet, daß** die Mittel, die geeignet sind, um die Teile (10, 11) zu heizen, aus elektrischen oder induktiven Mitteln bestehen, während die Mittel, die geeignet sind, um abzukühlen, aus Mitteln bestehen, erlaubend, eine kühlende Flüssigkeit umlaufen zu lassen.

7. Vorrichtung nach Anspruch 4 oder Anspruch 5, **dadurch gekennzeichnet, daß** die Mittel, die geeignet sind, um die Teile (10, 11) der Form (1) schnell zu heizen und abzukühlen, aus Mitteln (71) bestehen, erlaubend, in ihnen eine kühlende Druckflüssigkeit umlaufen zu lassen, die Mitteln zugeordnet sind, erlaubend, die besagte kühlende Flüssigkeit zu heizen oder abzukühlen.

8. Vorrichtung nach irgendeinem der Ansprüche 4 bis 7, **dadurch gekennzeichnet, daß** sie wenigstens einen Stempel (5) umfaßt, der geeignet ist, um die Teile (10, 11) der Form (1) zu durchqueren, die zu diesem Zweck gegenüberliegend Löcher (12, 13, 70) aufweisen.

9. Vorrichtung nach Anspruch 8, **dadurch gekennzeichnet, daß** der oder die Stempel (5) mit den Mitteln zum Schneiden (3) fest verbunden sind und durch dasselbe Antriebsmittel angetrieben werden.
